# EUROPEAN PATENT APPLICATION

(11) **EP 3 424 641 A1**
(43) Date of publication of application: **09.01.2019**
(21) Application number: 17806182.6
(22) Date of filing: 07.04.2017
(51) Int. Cl.: B24C 3/30, B24C 7/00, B24C 9/00

(54) **SHOT PROCESSING APPARATUS**

(30) Priority: 02.06.2016 JP 2016111279
(71) Applicant: Sintokogio, Ltd., Nagoya-shi, Aichi 450-6424 (JP)
(72) Inventor: UMEOKA Masato, Toyokawa-shi Aichi 441-1205 (JP); YAMAMOTO Shoichi, Toyokawa-shi Aichi 441-1205 (JP)
(74) Representative: Müller-Boré & Partner Patentanwälte PartG mbB
(86) International application number: PCT/JP2017/014540
(87) International publication number: WO 2017/208621

(57) **Abstract**

Provided is a shot processing apparatus capable of suppressing scattering of projection materials to the outside without causing any deterioration in projection efficiency. The shot processing apparatus comprises: a cabinet; a drum housed in the cabinet and having an opening allowing loading of a workpiece therethrough, wherein the drum is configured to be selectively disposed in one of a workpiece-loading position, a workpiece-processing position and a workpiece-unloading position; a projector for projecting the projection materials into the drum; and a door for selectively opening and closing the opening of the drum, the door being formed with a projection port for the projection materials, the projector being attached to the door so as to project the projection materials from the projection port; wherein the door is configured such that the projection port is disposed just above the opening of the drum when opening the opening of the drum.

## Description

### TECHNICAL FIELD

The present invention relates to a shot processing apparatus, and more particularly to a shot processing apparatus for abrasively cleaning a workpiece by projection materials (shots).

### BACKGROUND ART

In each of the following Patent Documents 1 and 2, there is described a so-called drum-type shot processing apparatus comprising a drum into which a target object to be processed (hereinafter referred to as "workpiece") is loaded, wherein the shot processing apparatus is operable to abrasively clean the workpiece by projection materials, while agitating the workpiece within the drum. More specifically, each of the shot processing apparatuses described in the Patent Documents 1 and 2 is equipped with a drum formed in a bottomed hollow cylindrical shape having an opening, and a projector for projecting projection materials. In the shot processing apparatus described in the Patent Document 1, the drum is configured to be turned within a cabinet to be selectively disposed in one of a workpiece-loading position, a workpiece-processing position and a workpiece-unloading position. Further, the projector is mounted to the cabinet, and operable, in a state in which the drum is disposed in the workpiece-processing position and rotated about a cylinder axis thereof to agitate the workpiece within the drum, to project the projection materials therefrom into the drum. In this way, the projection materials are impinged against the workpiece, to thereby subject the workpiece to abrasive cleaning or the like.

In the shot processing apparatus described in the Patent Document 2, the projector is mounted to a door for selectively opening and closing the opening of the drum, and operable, in a state in which the door closes the opening of the drum, and the drum is rotated about a cylinder axis thereof to agitate the workpiece within the drum, to project the projection materials therefrom into the drum. In this way, the projection materials are impinged against with the workpiece, to thereby subject the workpiece to abrasive cleaning or the like.

### CITATION LIST

### [Patent Document]

Patent Document 1: JP 2011-194486A
Patent Document 2: JP 2011-110642A

### SUMMARY OF INVENTION

### [Technical Problem]

However, in the shot processing apparatus described in the Patent Document 1, the drum is configured to be turned within the cabinet, and therefore a space is provided between the drum and the projector so as to prevent the drum being turned from interfering with the projector. Thus, the distance between the projector and the workpiece within the drum becomes long, leading to a problem of deterioration in efficiency regarding projection of the projection materials to the workpiece.

On the other hand, in the shot processing apparatus described in the Patent Document 2, the projector is mounted to the door for selectively opening and closing the opening of the drum. Thus, the distance between the projector and the workpiece within the drum becomes relatively short, so that it becomes possible to solve the above problem involved in the shot processing apparatus described in the Patent Document 1. However, the door in this shot processing apparatus is configured to be moved to a position above a sidewall of the drum, when opening the opening of the drum. In this state, the projection materials are likely to leak and scatter from the projector mounted to the door. Therefore, there is a need to suppress the possibility of scattering of the projection materials.

The present invention has been made to solve the above problems involved in the conventional apparatuses, and an object thereof is to provide a shot processing apparatus capable of suppressing scattering of projection materials to the outside without causing any deterioration in projection efficiency.

### [Solution to Technical Problem]

In order to achieve the above object, the present invention provides a shot processing apparatus for abrasively cleaning a workpiece by projection materials. The shot processing apparatus comprises: a cabinet; a drum housed in the cabinet and formed in a bottomed hollow cylindrical shape having an opening allowing loading of the workpiece therethrough, wherein the drum is configured to be selectively disposed in one of a workpiece-loading position for allowing the workpiece to be loaded into the drum, a workpiece-processing position for allowing the workpiece to be abrasively cleaned by the projection materials, and a workpiece-unloading position for allowing the workpiece to be unloaded from the drum; a projector for projecting the projection materials into the drum; and a door for selectively opening and closing the opening of the drum, the door being formed with a projection port for the projection materials, the projector being attached to the door so as to project the projection materials from the projection port; wherein the door is configured such that the projection port is disposed above the opening of the drum when opening the opening of the drum.

In the shot processing apparatus of the present invention having the above feature, the projector is attached to the door for selectively opening and closing the opening of the drum. Thus, the distance between the projector and the workpiece within the drum becomes relatively short, so that it becomes possible to provide good efficiency regarding projection of the projection materials to the workpiece. Further, the projection port of the projector formed in the door is disposed above the opening of the drum when opening the opening of the drum. Thus, the projection materials leaking from the projector through the projection port during movement of the door drop into the opening of the drum, so that it becomes possible to suppress scattering of the projection materials to the outside of the shot processing apparatus.

Preferably, in the shot processing apparatus of the present invention, the door is attached to the cabinet through a link arm, wherein the link arm has one end pivotally attached to the door and the other end pivotally attached to the cabinet, and wherein the other end of the link arm is located above the one end, in each of a state in which the door opens the opening of the drum and a state in which the door closes the opening of the drum.

According to this feature, the other end of the link arm is located above the one end, in each of the state in which the door opens the opening of the drum and the state in which the door closes the opening of the drum. That is, the door is hung downwardly from the cabinet, wherein the door is movable in a range within which the state of being hung downwardly from the cabinet is maintained, thereby selectively opening and closing the opening of the drum. Thus, according to this feature, the movement range of the door for selectively opening and closing the opening of the drum is relatively small, so that it becomes possible to move the door using less driving force, thereby keeping down costs.

Preferably, the shot processing apparatus of the present invention further comprises a projection material receiver provided on the cabinet at a position below a lower end of the door, wherein the projection material receiver is provided in conformity to a range of horizontal movement of the lower end of the door during opening/closing of the door.

According to this feature, when the projection materials leak from the projector during opening/closing of the door, the leaked projection materials can be received by the projection material receiver provided in conformity to the range of horizontal movement of the lower end of the door during opening/closing of the door. Therefore, this feature makes it possible to more reliably suppress the scattering of the projection materials to the outside of the shot processing apparatus.

Preferably, in the above shot processing apparatus, the cabinet is formed with a communication passage providing communication between an inside of the cabinet and a space located adjacent to and above the projection material receiver.

According to this feature, the projection materials received by the projection material receiver provided on the cabinet can be guided to flow into the cabinet via the communicating passage. Therefore, this feature makes it possible to suppress scattering of the projection materials to the outside of the shot processing apparatus due to overflow of the projection materials from the projection material receiver, and thus more reliably suppress the scattering of the projection materials to the outside.

Preferably, the shot processing apparatus of the present invention, the drum has an outer peripheral wall provided with a plurality of through-holes, wherein the shot processing apparatus further comprises a shielding member provided to cover the plurality of through-holes from outside the drum, wherein the shielding member has a double structure comprising a first shielding portion formed with a plurality of first communicating holes, and a second shielding portion formed with a plurality of second communicating holes at positions which do not overlap the first communicating holes of the first shielding portion.

According to this feature, even when the projection materials projected from the projector pass through the through-holes of the drum, the projection materials comes into collision with the first and second shielding portions of the shielding member, so that it is possible to drop the projection materials toward a lower region of the inside of the cabinet through the first communication holes of the first shielding portion and the second communication holes of the second shielding portion, while damping the momentum of the projection materials. Therefore, this feature makes it possible to suppress scattering of the projection materials from the cabinet to the outside due to bounding of the projection materials getting out of the drum through the through-holes of the drum.

Preferably, in the shot processing apparatus of the present invention, the drum has an outer peripheral wall and a bottom wall, wherein the shot processing apparatus further comprises a drum casing provided outside the drum to integrally cover the outer peripheral wall and the bottom wall.

According to this feature, the projection materials getting out of the drum through the through-holes of the drum are damped through collision with the drum casing, so that it becomes possible to suppress wearing of an inner surface of the cabinet due to the projection materials. Therefore, this feature makes it possible to reduce running costs.

Preferably, the above shot processing apparatus further comprises a drum casing provided outside the shielding member to cover the drum and the shielding member.

According to this feature, the projection materials getting out of the drum through the through-holes of the drum are much more damped through collision with the shielding member and further with the drum casing. Thus, it becomes possible to more reliably suppress the wearing of the inner surface of the cabinet due to the projection materials. Therefore, this feature makes it possible to further reduce the running costs.

Preferably, in the above shot processing apparatus, a lower portion of the drum casing is formed with a projection material discharging port for discharging the projection materials within the drum casing, to an outside of the drum casing, when the drum is in the workpiece-processing position.

According to this feature, the projection materials getting out of the drum through the through-holes of the drum are damped through collision with the drum casing, and then dropped from the projection material discharging port formed in the lower portion of the drum casing, toward a lower region of the inside of the cabinet. Therefore, this feature makes it possible to suppress scattering of the projection materials from the cabinet to the outside due to bounding of the projection materials getting out of the drum through the through-holes of the drum.

Preferably, in the shot processing apparatus of the present invention, the door is formed with an air-intake opening communicating with an outer side of the door, and provided with a protector on the side of the drum with respect to the air-intake opening, wherein the protector is configured to suppress leakage of the projection materials through the air-intake opening toward the outer side of the door.

According to this feature, even if the projection materials projected from the projector are reflected inside the drum and scattered toward the air-intake opening of the door, the protector can suppress leakage of the scattered projection materials to the outside of the door through the air-intake opening.

Preferably, the shot processing apparatus of the present invention further comprises: a projection material tank storing therein the projection materials, wherein the projection material tank is provided above the projector; an introduction pipe attached to the projection material tank to feed the projection materials downwardly; and an introduction tube provided below the introduction pipe, and formed with a projection material inlet opened upwardly at a position corresponding to the introduction pipe, wherein the projection material inlet is set to a size capable of receiving the projection materials fed from the introduction pipe, even when the introduction tube is moved during opening/closing of the door.

According to this feature, the projection material inlet of the introduction tube is set to a size capable of receiving the projection materials fed from the projection material tank via the introduction pipe, even when the introduction tube is moved in conjunction with opening/closing of the door. Thus, it becomes possible to suppress scattering of the projection materials from the introduction pipe to the outside of the shot processing apparatus.

Preferably, in the above shot processing apparatus, the introduction tube is configured to be moved in conjunction with the opening/closing of the door, and the introduction pipe is movable, following the movement of the introduction tube.

According to this feature, the introduction pipe is movable, following the movement of the introduction tube, so that, even when the introduction tube is moved in conjunction with the opening/closing of the door, the introduction pipe can reliably feed the projection materials from the projection material tank to the introduction tube. Therefore, this feature makes it possible to more reliably suppress the scattering of the projection materials from the introduction pipe to the outside of the shot processing apparatus.

Preferably, in the above shot processing apparatus, the introduction pipe is formed with a joint which is bendable, following the introduction tube.

According to this feature, the introduction pipe is formed with the joint, so that, even when the introduction tube is moved in conjunction with the opening/closing of the door, the introduction pipe can be bent naturally. Thus, a load to be imposed on the introduction pipe can be reduced to improve durability of the introduction pipe as compared to the case where the introduction pipe is composed of an accordion horse or a rubber hose. Therefore, this feature makes it possible to further reduce the running costs.

### [Effect of Invention]

The shot processing apparatus of the present invention is capable of suppressing scattering of the projection materials to the outside without causing any deterioration in projection efficiency.

### BRIEF DESCRIPTION OF DRAWINGS

FIG. 1 is a side view depicting a shot processing apparatus according to one embodiment of the present invention.
FIG. 2 is a front view depicting the shot processing apparatus according to the embodiment.
FIG. 3 is a sectional view depicting a drum and others in a state in which a door in the shot processing apparatus according to the embodiment is closed.
FIG. 4 is a sectional view depicting the drum and others in a state in which the door is opened.
FIG. 5 is a partial sectional view depicting an introduction tube and others in the state in which the door is closed.
FIG. 6 is a partial sectional view depicting the introduction tube and others in the state in which the door is opened.
FIG. 7A is a sectional view depicting the drum in the shot processing apparatus according to the embodiment.
FIG. 7B is a sectional view taken along the line A-A in FIG. 7A.
FIG. 8A is a sectional view depicting a state in which the drum in the shot processing apparatus according to the embodiment is disposed in a workpiece-loading position.
FIG. 8B is a sectional view depicting a state in which the drum has been moved from the workpiece-loading position to a workpiece-processing position.
FIG. 8C is a sectional view depicting a state in which an opening of the drum is closed in the workpiece-processing position.
FIG. 8D is a sectional view depicting a state in which the opening of the drum is opened in the workpiece-processing position.
FIG. 8E is a sectional view depicting a state in which the drum has been moved from the workpiece-processing position in FIG. 8D to a workpiece-unloading position.
FIG. 9 is a schematic diagram of the door in the shot processing apparatus according to the embodiment, as viewed from a direction perpendicular to a surface of the door.
FIG. 10A is an enlarged sectional view taken along the line B-B in FIG. 9.
FIG. 10B is an enlarged sectional view taken along the line C-C in FIG. 9.

### DESCRIPTION OF EMBODIMENTS

With reference to the drawings, a shot processing apparatus according to one embodiment of the present invention will now be described.

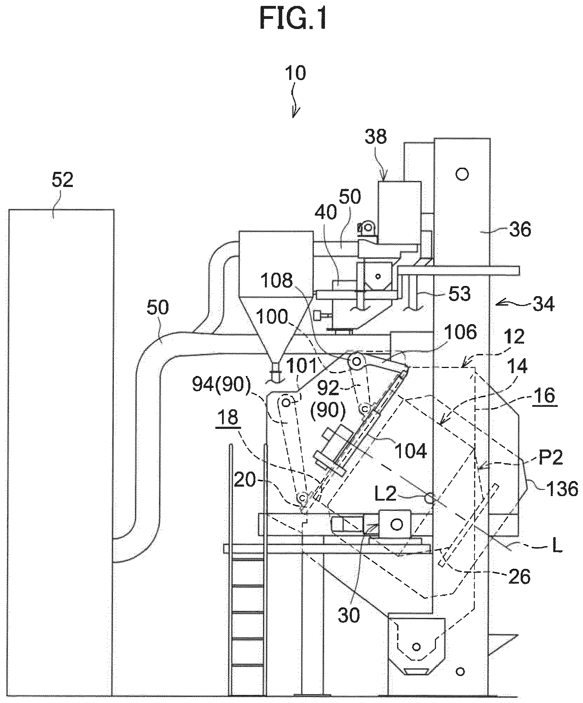

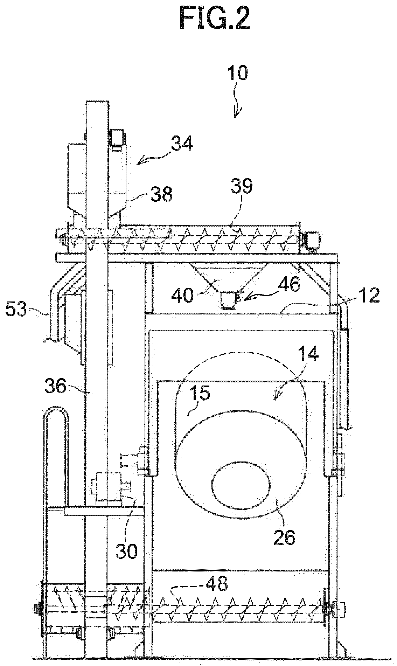

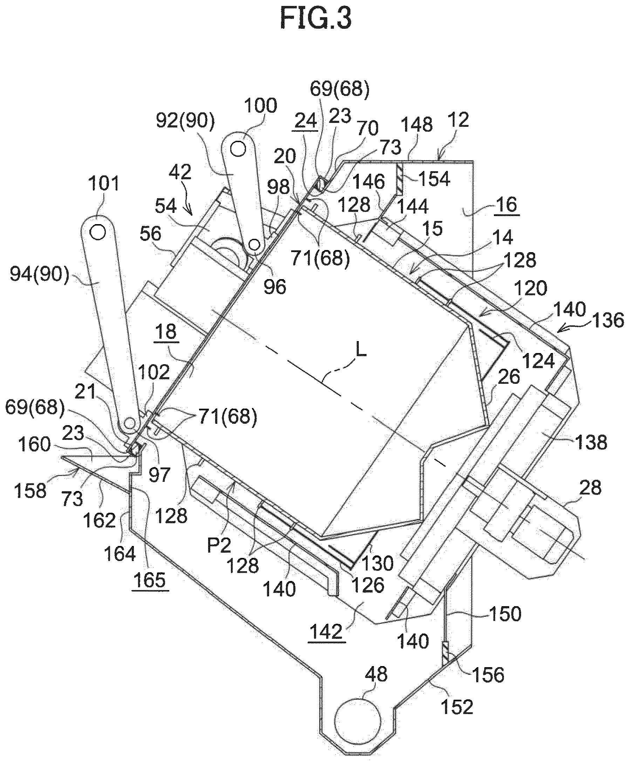

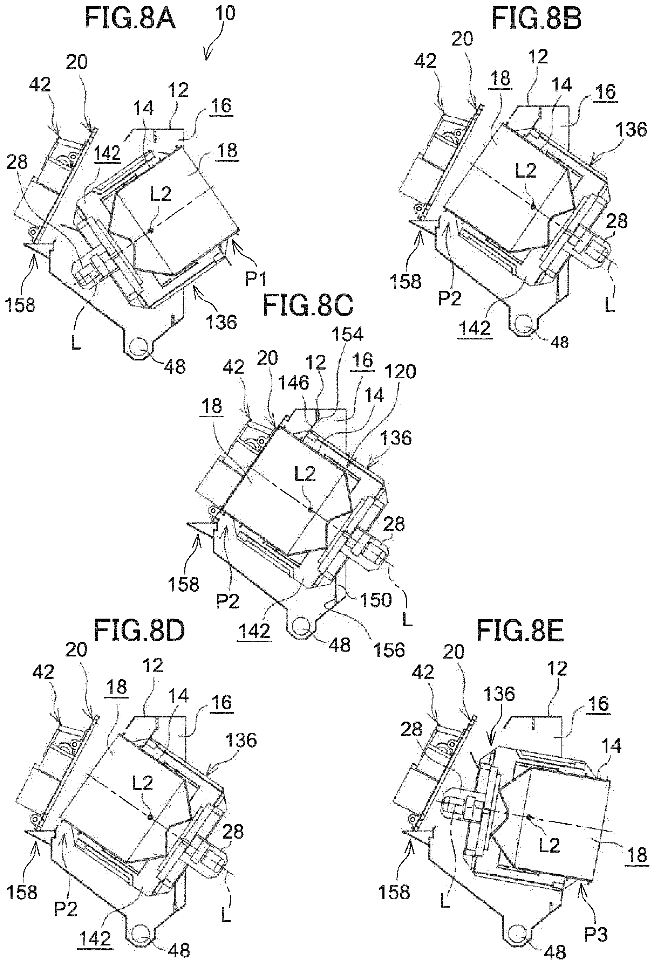

As depicted in FIGS. 1 and 2, the shot processing apparatus 10 comprises a cabinet 12, a drum 14 housed in the cabinet 12, and a door 20 installed on the side of an opening 18 of the drum 14. The cabinet 12 is provided with: a carrying-in-and-out port 16 (see FIGS. 8A and 8E) to enable carrying-in and carrying-out of a workpiece through the carrying-in-and-out port 16; and a processing-side opening 24 (see FIG. 3) which is penetratingly formed at a position corresponding to the opening 18 of the drum 14 in a state in which the drum 13 is disposed in an aftermentioned workpiece-processing position P2.

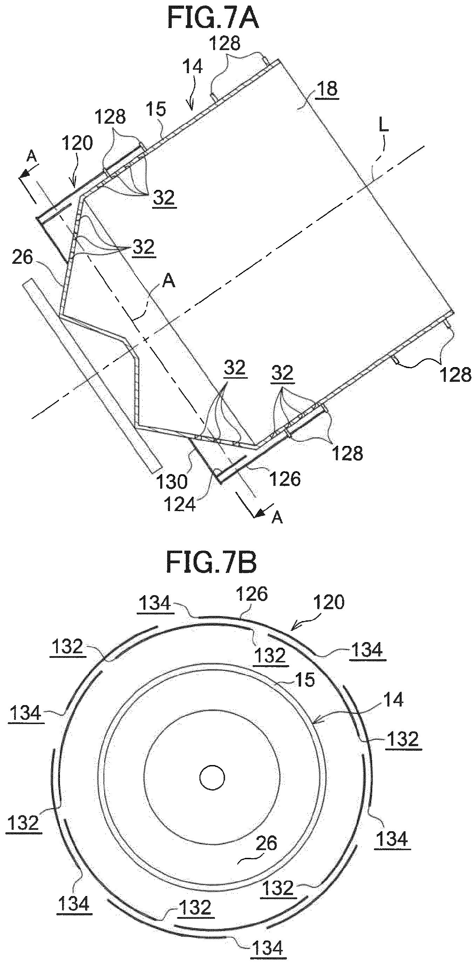

The drum 14 is formed in a bottomed hollow cylindrical shape having an opening allowing loading of a workpiece therethrough, wherein an end of the drum 14 opposite to the opening 18 is closed by a bottom wall 26. The drum 14 is configured to be rotatable about a cylinder axis L by a drive motor 28 (see FIG. 3). Further, the drum 14 is configured to be turnable about a turning shaft L2 provided to extend horizontally along a direction orthogonal to the cylinder axis L by a turning mechanism 30. More specifically, the drum 14 is configured to be turned about the turning shaft L2 so as to take one of a workpiece-loading position P1, a workpiece-processing position P2, and a workpiece-unloading position P3 (see FIGS. 8A to 8E). Further, the drum 14 is formed with a plurality of through-holes 32, in a region consisting of a lower portion of an outer peripheral wall 15 thereof on the side of the bottom wall 26 of the drum 14 and a portion of the bottom wall 26 continuous with the lower portion (see FIG. 7A).
Each of the through-holes 32 has a size set to allow projection materials to pass therethrough and prevent a workpiece from passing therethrough. The turning shaft L2 is attached to an aftermentioned drum casing 136.

On the side of the carrying-in-and-out port 16 of the cabinet 12, a non-depicted workpiece loading device is provided which is configured to carry, in the drum 14, a workpiece conveyed from the outside of the shot processing apparatus 10. This workpiece loading device comprises a box-shaped loading bucket containing a workpiece, and a bucket loader for tilting the loading bucket. This bucket loader is configured to raise the loading bucket to the carrying-in-and-out port 16, and then to be tilted so as to enable the workpiece contained in the loading bucket to be loaded from above the carrying-in-and-out port 16 into the drum 14 located in the workpiece-loading position P1 (see FIG. 8A) within the cabinet 12.

Further, a non-depicted workpiece ejecting device is provided between a portion of the cabinet 12 on the side of the carrying-in-and-out port 16 and the workpiece loading device. This workpiece ejecting device is equipped with: a workpiece receiving trough for receiving the workpiece unloaded after being subjected to shot processing from the inside of the drum 14 located in the workpiece-unloading position P3 (see FIG. 8E) during unloading of the workpiece, through a lower region of the carrying-in-and-out port 16; and a carrying-out vibratory feeder for carrying the workpiece in the workpiece receiving trough out of the shot processing apparatus 10.

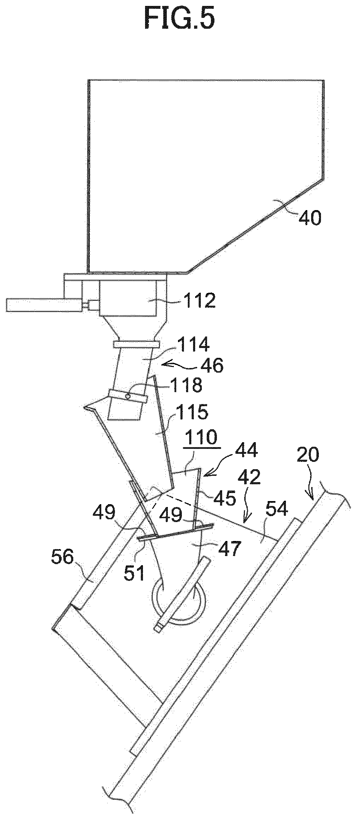

The cabinet 12 is internally provided with a circulation device 34. This circulation device 34 comprises: a bucket elevator 36 to which a non-depicted bucket for lifting projection materials upwardly is attached; a separator 38 connected to an upper outlet of the bucket elevator 36; an upper screw conveyer 39 and a projection material tank 42 each provided below the separator 38; and an introduction pipe 46 (see FIG. 5) provided to extend from a projection material tank 40 and connected to an aftermentioned introduction tube 44 attached to a projector 42. Further, the cabinet 12 has a lower region provided with a lower screw conveyer 48 for collecting projection materials toward the bucket elevator 36 (see FIG. 2).

The bucket elevator 36 and the separator 38 are connected to a dust collector 52 via a duct 50. This dust collector 52 comprises a non-depicted suction fan which is configured to suck and release lightweight powder dust and the like which do not gather in the lower region of the inside of the cabinet 12.

As depicted in FIG. 3, the projector 42 is a centrifugal projector comprising a body casing 54, and a non-depicted impeller housed in the body casing 54. The body casing 54 is formed in an approximately trapezoidal shape in side view (see also FIG. 5), more specifically, in a rectangular tube shape whose opposite ends, respectively, on the side of upper and lower bases of the approximately trapezoidal shape are opened. Further, a casing cover 56 is attached to the upper base-side end of the body casing 54, such that it closes up the opening at the upper base-side end through a sealing member. The lower base-side end of the body casing 54 is attached to an outer surface of the door 20.

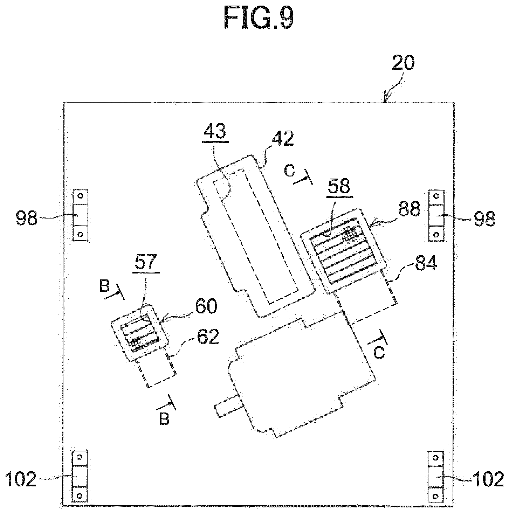

The door 20 is formed in an approximately-rectangular plate-like shape (see FIG. 9). The door 20 is formed with a projection port 43 for allowing projection materials to be projected from the projector 42 into the drum 14 therethrough.

An inner surface of the door 20 on the side of the drum 14 is formed with a plurality of protrusions 68. These protrusions 68 are comprised of: a door sidewall 23 protruding from an outer edge of the door 20 toward the drum 14; an outer protrusion 69 formed on the side of the cylinder axis L with respect to the door sidewall 23 in opposed relation to the door sidewall 23; a sealing member 73 provided between the door sidewall 23 and the outer protrusion 69; and a pair of inner protrusions 71 each provided in a circular pattern as viewed in the direction of the cylinder axis L and arranged to face the outer peripheral wall 15 of the drum 14, respectively, from outside and inside the outer peripheral wall 15. As above, the facing section between the drum 14 and the pair of inner protrusions 71 of the door 20 is formed as a labyrinth structure. The sealing member 73 is brought in contact with a sidewall 70 of the cabinet 12 formed with the processing-side opening 24, when the door 20 closes the opening 18 of the drum 14. In this state, the door 20 is disposed such that the protrusions 68 thereof can avoid contact with the drum 14. Thus, the drum 14 can be rotated about the cylinder axis L without any contact with the door 20.

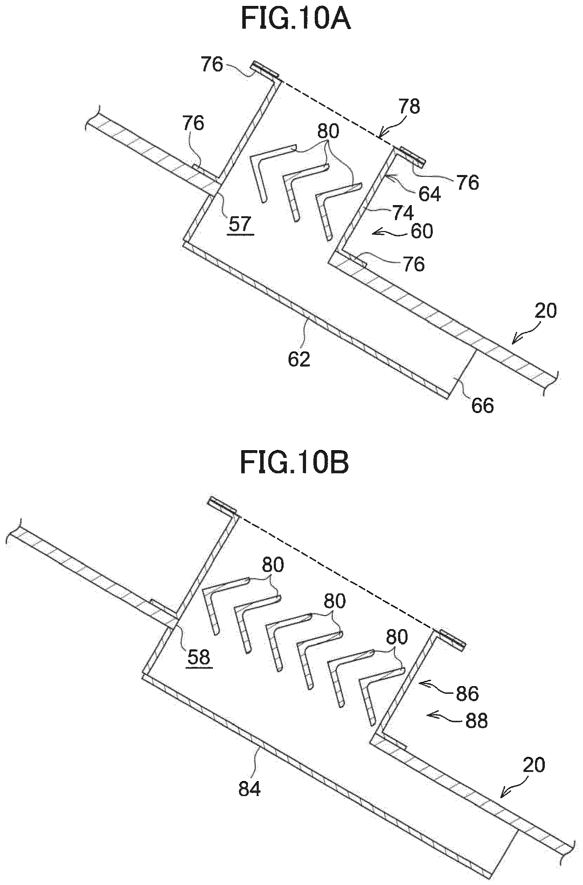

The door 20 is further provided with two air-intake openings 57, 58, as depicted in FIGS. 10A and 10B. The air-intake opening 57 is provided with a protector 60 which comprises a drum-side member 62 and an outer door surface-side member 64. The drum-side member 62 is formed in an approximately-rectangular box-like shape having a size greater than that of the air-intake opening 57, and disposed to cover the air-intake opening 57 from the side of the back surface of the door 20 (see FIG. 9). The drum-side member 62 has a lower end 66 which is spaced apart from the air-intake opening 57 and opened communicably with the inside of drum-side member 62.

The outer door surface-side member 64 of the protector 60 is formed in an approximately-square tube shape having an internal space with approximately the same cross-sectional size as that of the air-intake opening 57. The outer door surface-side member 64 has a sidewall 74, and two flanges 76 provided, respectively, at axially opposite ends thereof to extend in a direction approximately orthogonal to the sidewall 74. A first one of the flanges 76 on the side of the door 20 is joined to the door 20, and a meshed member 78 is attached to the other, second, flange 76 on the opposite side of the first flange 76.

Further, three angle members 80 stretched in the same direction are internally attached to the sidewall 74 of the outer door surface-side member 64 in a side-by-side arrangement. The angle members 80 are each formed such that a cross-section orthogonal to a longitudinal direction thereof has an approximately L shape, and attached such that they are inclined in the same direction so as not to close up the air-intake opening 57.

Similarly, the air-intake opening 58 is provided with a protector 88 comprising a drum-side member 84 and an outer door surface-side member 86. Except that the size of the protector 88 and the number of angle members 80 provided inside the outer door surface-side member 86 are different from those in the protector 60, the protector 88 has approximately the same structure as that of the protector 60.

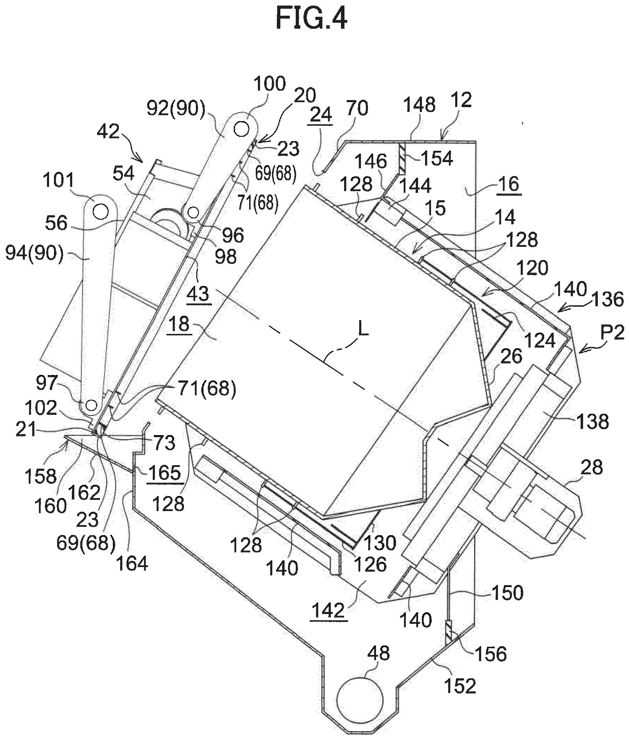

As depicted in FIG. 1, a plurality of link arms 90 are attached to the door 20. The link arms 90 are comprised of: a pair of right and left first link arms 92 provided on the side of an upper end of the door 20; and a pair of right and left second link arms 94 provided on the side of a lower end of the door 20. Each of the first link arms 92 is formed in an elongate shape extending along an upward-downward direction, wherein a first one 96 of longitudinally opposite ends of the first link arm 92 is rotatably attached to a first bracket 98 attached to an upper region of the outer surface of the door 20 (see FIGS. 3 and 4). On the other hand, the other, second, end 100 of the first link arm 92 is rotatably attached to a site of the cabinet 12 located above the first bracket 98.

As with the first link arms 92, each of the second link arms 94 is formed in an elongate shape extending along the upward-downward direction, wherein a first one 97 of longitudinally opposite ends of the second link arm 94 is rotatably attached to a second bracket 102 attached to a lower region of the outer surface of the door 20 (see FIGS. 3 and 4). On the other hand, the other, second, end 101 of the second link arm 94 is rotatably attached to a site of the cabinet 12 located above the second bracket 102.

The door 20 is provided with an opening and closing cylinder 104. This opening and closing cylinder 104 has a mechanism capable of selectively extending and retracting along the bottom surface of the door 20, wherein the opening and closing cylinder 104 has a distal end to which a coupling arm 106 is attached. This coupling arm 106 is formed in an elongate shape extending in a direction approximately perpendicular to the bottom surface of the door 20, wherein the coupling arm 106 has a base end 108 fixed to the first link arms 92 at a position corresponding to the second end 100. Thus, upon retraction of the opening and closing cylinder 104, the coupling arm 106 is swung about the base end 108 in a direction causing a distal end thereof to be moved downwardly, so that the door 2 is moved in a direction causing the opening of the drum 14 to be opened (see FIG. 4). Here, the door 20 is configured such that the projection port 43 thereof is disposed just above the opening 18 of the drum 14 in the state in which the door 20 opens the opening of the drum 14.

As depicted in FIG. 5, an introduction tube 44 is attached to the projector 42 on the door 20. This introduction tube 44 comprises an upper induction tube 45 and a lower induction tube 47. The upper induction tube 45 is formed in an approximately-circular hollow cylindrical shape having an axial direction extending in the upward-downward direction, wherein the upper induction tube 45 has an upper end formed with a projection material inlet 110. This projection material inlet 110 is configured such that an opening area thereof is greater than that of an opening of a lower end of the upper induction tube 45. The lower end of the upper induction tube 45 is formed with an upper induction tube flange 49.

The lower induction tube 47 is formed in an approximately-circular hollow cylindrical shape having an axial direction extending in the upward-downward direction, wherein lower induction tube 47 has an upper end connected to the lower end of the upper induction tube 45, and a lower end which is bent so as to be connected to a sidewall of the body casing 54 of the projector 42. The upper end of the lower induction tube 47 is formed with a lower induction tube flange 51 which is joined to the upper induction tube flange 49 to thereby connect the upper induction tube 45 and the lower induction tube 47 together.

The projection material tank 40 is provided above the projector 42. The projection material tank 40 has a lower end formed with an opening opened downwardly, and the introduction pipe 46 is attached to a position corresponding to the opening of the projection material tank 40. The introduction pipe 46 comprises an upper introduction pipe 114, a lower introduction pipe 115, and a flow regulating device 112 which is configured to regulate an amount of projection materials to be supplied downwardly from the projection material tank 40 after being stored in the projection material tank 40. The projection materials passing through the flow regulating device 112 are suppled downwardly through the upper introduction pipe 114.

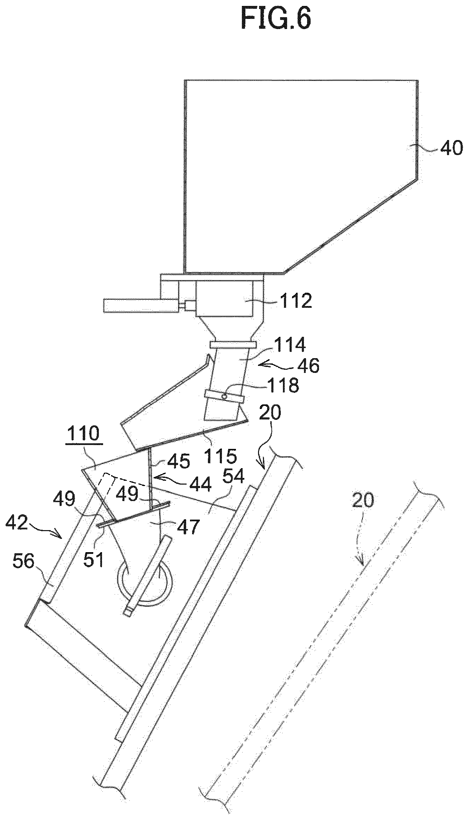

The lower introduction pipe 115 is provided around a lower end of the upper introduction pipe 114. The lower introduction pipe 115 is formed in an approximately-circular hollow cylindrical shape having an axial direction extending in the upward-downward direction. The lower introduction pipe 115 has an upper end whose opening is set to be greater than an opening of a lower end thereof. Further, a joint 118 is provided between the upper introduction pipe 114 and the lower introduction pipe 115. This joint 118 is provided as not only a means to connect the lower introduction pipe 115 to the lower end of the upper introduction pipe 114, but also a means to enable the lower introduction pipe 115 to be bent with respect to the upper introduction pipe 114. Here, the lower introduction pipe 115 is bent, following the introduction tube 44 being moved in conjunction with opening/closing of the door 20 (see FIG. 6). The lower end of the upper introduction pipe 114 is partly inserted in the opening at the upper end of the lower introduction pipe 115. Further, the lower end of the lower introduction pipe 115 is partly inserted in the projection material inlet 110 of the upper induction tube 45.

As depicted in FIG. 7A, a shielding member 120 is provided around a part of the outer peripheral wall 15 and the bottom wall 26 of the drum 14. This shielding member 120 is provided in opposed relation to the region of the outer peripheral wall 15 and the bottom wall 26 of the drum 14 formed with the plurality of through-holes 32. The shielding member 120 has a double structure comprising a first shielding portion 124 formed in a circular hollow cylindrical shape having an axis coincident with the cylinder axis L of the drum 14, and a second shielding portion 126 formed in a circular hollow cylindrical shape extending along the cylinder axis L of the drum 14 and provided outside the first shielding portion 124. A length of the first shielding portion 124 along the cylinder axis L is set such that the first shielding portion 124 covers an outward side of the portion of the bottom wall 26 of the drum 14 formed with the through-holes 32. A length of the second shielding portion 126 along the cylinder axis L is set such that the second shielding portion 126 covers an outward side of the portion of the outer peripheral wall 15 of the drum 14 formed with the through-holes 32. Here, the second shielding portion 126 is partly supported by a part of a plurality of protrusions 128 formed on the outer peripheral wall 15 of the drum 14.

A shield base 130 is attached to respective lower ends of the first shielding portion 124 and the second shielding portion 126. The bottom wall 26 of the drum 14 is inserted in a central hole of the shield base 130.

As depicted in FIG. 7B, the first shielding portion 124 is formed with a plurality of first communicating holes 132 penetrating therethrough in a through-thickness direction. The second shielding portion 126 is formed with a plurality of second communicating holes 134 penetrating therethrough in a through-thickness direction at positions which do not overlap the first communicating holes 132. The first communicating holes 132 are formed in a partial range of the first shielding portion 124 on the side of the shield base 130. In this embodiment, they are formed between an approximately middle position (see the one-dot chain line A in FIG. 7A) of the first shielding portion 124 and the shield base 130. Similarly, the second communicating holes 134 are formed in a partial range of the second shielding portion 126 on the side of the shield base 130. In this embodiment, they are formed between a position of the second shielding portion 126 corresponding to the one-dot chain line A in FIG. 7A and the shield base 130.

As depicted in FIGS. 3 and 4, a drum casing 136 is provided outside the drum 14 and the shielding member 120. This drum casing 136 is formed in a bottomed hollow cylindrical shape having an axis coincident with the cylinder axis L of the drum 14, wherein the drum casing 136 has a casing base 138 to which the bottom wall 26 of the drum 14 is fastened. Further, a casing wall member 140 is provided on an inner peripheral surface of the drum casing 136. This casing wall member 140 is composed of a plurality of members each formed in an approximately plate shape, and detachably laminated to the drum casing 136. The casing wall member 140 is disposed to almost cover a region of the drum 14 extending from the vicinity of the opening 18 to the bottom wall 26. Here, a lower portion of the laminate of the drum casing 136 and the casing wall member 140 is formed with a projection material discharging port 142 communicating between the inside of the drum casing 136 and the outside of the drum casing 136 (the inside of the cabinet 12). Each of the plurality of members composing the casing wall member 140 is set to a size allowing a worker to carry around it in single form.

The drum casing 136 has an upper end 144 provided with an upper contact member 146. The upper contact member 146 is provided to extend outwardly from the drum casing 136. On the other hand, an upper seat member 154 made of rubber is provided to extend from an inner surface of a top wall 148 of the cabinet 12 toward the inside of the cabinet 12. The upper contact member 146 is configured to be brought into contact with the upper seat member 154 when the drum 14 is disposed in the workpiece-processing position P2.

The casing base 138 of the drum casing 136 has a lower outer surface provided with a lower contact member 150 extending outwardly from the drum casing 136. On the other hand, a lower seat member 156 made of rubber is provided to extend from an inner surface of a bottom wall 152 of the cabinet 12 toward the inside of the cabinet 12. The lower contact member 150 is configured to be brought into contact with the lower seat member 156 when the drum 14 is disposed in the workpiece-processing position. This structure makes it possible to suppress leakage of projection materials projected from the projector 42, to the outside through the carrying-in-and-out port 16 of the cabinet 12.

A projection material receiver 158 is provided just below the lower end 21 of the door 20. The cabinet 12 has a lower wall 164 extending downwardly from the processing-side opening 24, and the projection material receiver 158 is provided to protrude outwardly from an outer surface of the lower wall 164. The projection material receiver 158 comprises a pair of sidewalls 160, and a bottom wall 162 connecting respective lower ends of the sidewalls 160 and inclined downwardly toward the cabinet 12, wherein a cross-section of the projection material receiver 158 orthogonal to a direction along which the projection material receiver 158 protrudes is formed in an approximately U shape. Here, an amount of protrusion of the projection material receiver 158 is set in conformity to a range of movement of the lower end 21 of the door 20 during opening/closing of the opening of the drum 14 by the door 20. More specifically, the projection material receiver 158 protrudes such that it is disposed just below the lower end 21 of the door 20, in each of a state in which the door 20 closes the opening of the drum 14 (see FIG. 3) and a state in which the door 20 opens the opening of the drum 14 (see FIG. 4).

The lower wall 164 of the cabinet 12 is formed with a communication passage 165. This communication passage 165 is disposed adjacent to the projection material receiver 158 and on an upper side with respect to the bottom wall 162 of the projection material receiver 158, and formed to penetrate through the lower wall 164 to provide communication between the outside and the inside of the cabinet 12.

The following description will be made about operation of the shot processing apparatus 10 according to the above embodiment.

As depicted in FIG. 8A, in operation of carrying a workpiece in the drum 14, the drum 14 is turned about the turning shaft L2 to the workpiece-loading position P1 where the opening 18 of the drum 14 protrudes from the carrying-in-and-out port 16 of the cabinet 12, while being oriented obliquely upwardly. In this state, a workpiece carried from the outside of the shot processing apparatus 10 by the workpiece loading device is loaded into the drum 14.

Upon completion of loading of the workpiece into the drum 14, the drum 14 is turned about the turning shaft L2 to the workpiece-processing position P2 where the opening 18 of the drum 14 is opposed to the projector 42, as depicted in FIG. 8B. When the drum 14 is disposed in the workpiece-processing position P2, the door 20 closes the opening 18 of the drum 14, as depicted in FIG. 8C. As a result, the inside of the cabinet 12 is hermetically closed by the door 20, the upper contact member 146, the upper seat member 154, the lower contact member 150 and the lower seat member 156. In this state, the drum 14 is rotated about the cylinder axis L. Thus, the workpiece within the drum 14 is agitated.

Along with the rotation of the drum 14 about the cylinder axis L, the projector 42, the bucket elevator 36, the lower screw conveyer 48 and the dust collector 52 are activated (see FIG. 1). Thus, projection materials are supplied from the bucket elevator 36 into the projection material tank 40 via the separator 38, and then introduced from the projection material tank 40 into the projector 42 via the introduction pipe 46 and the introduction tube 44 (see FIG. 5). Then, the projection materials are projected from the projector 42 toward the workpiece within the drum 14, so that the workpiece is subjected to shot processing.

More specifically, according to the rotation of the drum 14, the projection materials projected into the drum 14 are discharged from the through-holes 32 of the drum 14 (see FIGS. 7A and 7B) to the outside the drum 14, together with powder dust, fragments (scales) and the like generated during the shot processing. The discharged projection materials and others are gathered in the lower region of the inside of the cabinet 12 through the shielding member 120 and the drum casing 136, and then collected to a lower section of the bucket elevator 36 by the lower screw conveyer 48. Then, the collected projection materials and others are conveyed to the separator 38 by the bucket elevator 36, and reusable projection materials and a waste substance such as powder dust and fragments are separated from each other by the separator 38. The separated projection materials are conveyed to the projection material tank 40 by the upper screw conveyer 39, and stored in the projection material tank 40. Then, the stored projection materials are supplied to the projector 42 through the introduction pipe 46 and the introduction tube 44, and reused. On the other hand, the separated waste substance such as powder dust and fragments is ejected to the outside of the shot processing apparatus 10 through a fragment ejection pipe 53 (see FIG. 1). It should be noted that lightweight powder dust and the like which do not gather in the lower region of the inside of the cabinet 12 are sucked and released by the dust collector 52.

Upon completion of the shot processing, the projector 42 is deactivated, and the door 20 opens the opening 18 of the drum 14, as depicted in FIG. 8D. Then, as depicted in FIG. 8E, the drum 14 is turned about the turning shaft L2 to the workpiece-unloading position P3 where the opening 18 of the drum 14 protrudes from the carrying-in-and-out port 16 of the cabinet 12, while being oriented obliquely downwardly. Thus, the workpiece within the drum 14 is transferred to the workpiece receiving trough of the workpiece ejecting device, and carried out of the shot processing apparatus 10 by the carrying-out vibratory feeder or the like to terminate a series of operations.

The following description will be made about effects/advantageous effects of the shot processing apparatus 10 according to the above embodiment.

In the shot processing apparatus 10 according to the above embodiment, the projector 42 is provided on the door 20 for selectively opening and closing the opening 18 of the drum 14, as depicted in FIG. 3. Thus, the distance between the projector 14 and the workpiece within the drum 14 becomes relatively short, so that it becomes possible to provide good efficiency regarding projection of the projection materials to the workpiece. Further, the projection port 43 of the projector 42 formed in the door 20 is disposed just above the opening 18 of the drum 14 when opening the opening 18 of the drum 14. Thus, the projection materials leaking from the projector 42 through the projection port 43 during movement of the door 20 drop into the opening 18 of the drum 14. That is, it becomes possible to suppress scattering of the projection materials to the outside of the shot processing apparatus 10. This makes it possible to suppress scattering of the projection materials to the outside without any deterioration in projection efficiency.

In the above embodiment, the second end (100, 101) of the link arm 90 is located above the first end (96, 97), in each of the state in which the door 20 opens the opening 18 of the drum 14 and the state in which the door 20 closes the opening 18 of the drum 14. That is, the door 20 is hung downwardly from the cabinet 12, wherein the door 20 is movable in a range within which the state of being hung downwardly from the cabinet 12 is maintained, thereby selectively opening and closing the opening 18 of the drum 14. Thus, the movement range of the door 20 for selectively opening and closing the opening 18 of the drum 14 is relatively small. Further, if the link arm 90 takes a horizontal posture during opening/closing of the door 20, a rotational load necessary for rotating the link arm 90 is maximized. However, the link arm 90 in the above embodiment does not take horizontal posture during opening/closing of the door 20. As a result, the door 20 can be moved using less driving force, so that it becomes possible to downsize a device for moving the door 20 and thus further reduce energy consumption. This makes it possible to suppress device costs and running costs.

In the above embodiment, when the projection materials leak from the projector 42 during opening/closing of the door 20, the leaked projection materials can be received by the projection material receiver 158 provided in conformity to the range of movement of the lower end 21 of the door 20 during opening/closing of the door 20. This makes it possible to more reliably suppress the scattering of the projection materials to the outside of the shot processing apparatus 10.

In the above embodiment, the projection materials received by the projection material receiver 158 provided outside the cabinet 12 can be guided to flow into the inside of cabinet 12 via the communicating passage 165. Therefore, it becomes possible to suppress scattering of the projection materials to the outside of the shot processing apparatus 10 due to overflow of the projection materials from the projection material receiver 158. Further, it becomes possible to eliminate a need for a task in which of a worker collects the projection materials accumulated in the projection material receiver 158.

In the above embodiment, even when the projection materials projected from the projector 42 pass through the through-holes 32 of the drum 14, the projection materials come into collision with the first and second shielding portions 124, 126 of the shielding member 120, so that it is possible to drop the projection materials toward the lower region of the inside of the cabinet 12 through the first communication holes 132 of the first shielding portion 124 and the second communication holes 134 of the second shielding portion 126, while damping the momentum of the projection materials. Thus, it becomes possible to suppress scattering of the projection materials from the cabinet 12 to the outside due to bounding of the projection materials getting out of the drum 14 through the through-holes 32 of the drum 14. This makes it possible to more reliably suppress the scattering of the projection materials to the outside of the shot processing apparatus 10.

In the above embodiment, the projection materials getting out of the drum 14 through the through-holes 32 of the drum 14 are further damped through collision with the drum casing 136, so that it becomes possible to more reliably suppress wearing of an inner surface of the cabinet 12 due to the projection materials. This makes it possible to further reduce the running costs. In addition, when the drum casing 136 is provided, the drum casing 136 functions as a so-called "sound barrier wall", so as to reduce noise during abrasive cleaning of the workpiece.

In the above embodiment, the projection materials getting out of the drum 14 through the through-holes 32 of the drum 14 are damped through collision with the drum casing 136, and then dropped from the projection material discharging port 142 formed in the lower portion of the drum casing 136, toward the lower region of the inside of the cabinet 12. Thus, it becomes possible to suppress scattering of the projection materials from the cabinet 12 to the outside due to bounding of the projection materials getting out of the drum 14 through the through-holes 32 of the drum 14.

In the above embodiment, the casing wall member 140 is detachably laminated to the drum casing 136, and formed as an assembly of a plurality of members each having a size allowing a worker to carry around it, so that, even when the member becomes worn due to collision with the projection materials, it becomes possible to easily replace it with new one. That is, it becomes possible to improve maintenance performance.

In the above embodiment, even if the projection materials projected from the projector 42 are reflected inside the drum and scattered toward the air-intake opening (57, 58) of the door 20, the protector (60, 88) can suppress leakage of the scattered projection materials to the outside of the door 20 through the air-intake opening (57, 58). This makes it possible to more reliably suppress the scattering of the projection material to the outside of the shot processing apparatus 10.

In the above embodiment, the projection material inlet 110 of the introduction tube 44 is set to a size capable of receiving the projection materials fed from the projection material tank 40 via the introduction pipe 46, even when the introduction tube 44 is moved in conjunction with opening/closing of the door 20. Thus, it becomes possible to suppress scattering of the projection materials from the introduction pipe 46 to the outside of the shot processing apparatus 10. This makes it possible to more reliably suppress the scattering of the projection materials to the outside of the shot processing apparatus 10.

In the above embodiment, the introduction pipe 46 is movable, following the movement of the introduction tube 44, so that, even when the introduction tube 44 is moved in conjunction with the opening/closing of the door 20, the introduction pipe 46 can reliably feed the projection materials from the projectile tank 40 to the introduction tube 44. Thus, it becomes possible to more reliably suppress the scattering of the projection materials from the introduction pipe 46 to the outside of the shot processing apparatus 10. This makes it possible to more reliably suppress the scattering of the projection materials to the outside of the shot processing apparatus 10.

In the above embodiment, the introduction pipe 46 is formed with the joint 118, so that, even when the introduction tube 44 is moved in conjunction with the opening/closing of the door 20, the introduction pipe 46 can be bent naturally. Thus, a load to be imposed on the introduction pipe 46 can be reduced to improve durability of the introduction pipe 46 as compared to the case where the introduction pipe 46 is composed of an accordion horse or a rubber hose. This makes it possible to further reduce the running costs.

In the above embodiment, the introduction pipe 46 is configured to be moved, following the movement of the introduction tube 44, by means of the joint 118. Alternatively, an accordion horse may be used as the introduction pipe 46 to enable the introduction pipe 46 to be moved, following the introduction tube 44.

Further, in the above embodiment, the door 20 is configured to be selectively opened and closed by a four-link mechanism composed of the door 20, the first link arms 92, the second link arms 94 and the cabinet 12. Alternatively, the door 20 may be configured to be selectively opened and closed only by a single link arm.

Although an advantageous embodiment of the present invention has been shown and described, it should be understood that the present invention is not limited to such an embodiment, but various changes and modifications may be made therein without departing from the spirit and scope thereof as set forth in the appended claims.

### LIST OF REFERENCE SIGNS

10: shot processing apparatus
12: cabinet
14: drum
15: outer peripheral wall
18: opening
20: door
21: lower end
26: bottom wall of drum (bottom wall)
32: through-hole
40: projection material tank
42: projector
43: projection port
44: introduction tube
46: introduction pipe
57: air-intake opening
60: protector
90: link arm
96: first end
100: second end
110: projection material inlet
118: joint
120: shielding member
124: first shielding portion
126: second shielding portion
132: first communicating hole
134: second communicating hole
136: drum casing
142: projection material discharging port
P1: workpiece-loading position
P2: workpiece-processing position
P3: workpiece-discharging position

## Claims

1. A shot processing apparatus for abrasively cleaning a workpiece by projection materials, comprising:
a cabinet;
a drum housed in the cabinet and formed in a bottomed hollow cylindrical shape having an opening allowing loading of the workpiece therethrough, the drum being configured to be selectively disposed in one of a workpiece-loading position for allowing the workpiece to be loaded into the drum, a workpiece-processing position for allowing the workpiece to be abrasively cleaned by the projection materials, and a workpiece-unloading position for allowing the workpiece to be unloaded from the drum;
a projector for projecting the projection materials into the drum; and
a door for selectively opening and closing the opening of the drum, the door being formed with a projection port for the projection materials, the projector being attached to the door so as to project the projection materials from the projection port;
wherein the door is configured such that the projection port is disposed above the opening of the drum when opening the opening of the drum.

2. The shot processing apparatus according to claim 1, wherein the door is attached to the cabinet through a link arm, the link arm having one end pivotally attached to the door and the other end pivotally attached to the cabinet, and wherein the other end of the link arm is located above the one end, in each of a state in which the door opens the opening of the drum and a state in which the door closes the opening of the drum.

3. The shot processing apparatus according to claim 1 or 2, wherein the shot processing apparatus further comprises a projection material receiver provided on the cabinet at a position below a lower end of the door, the projection material receiver being provided in conformity to a range of horizontal movement of the lower end of the door during opening/closing of the door.

4. The shot processing apparatus according to claim 3, wherein the cabinet is formed with a communication passage providing communication between an inside of the cabinet and a space located adjacent to and above the projection material receiver.

5. The shot processing apparatus according to any one of claims 1 to 4, wherein the drum has an outer peripheral wall provided with a plurality of through-holes, and wherein the shot processing apparatus further comprises a shielding member provided to cover the plurality of through-holes from outside the drum, the shielding member having a double structure comprising a first shielding portion formed with a plurality of first communicating holes, and a second shielding portion formed with a plurality of second communicating holes at positions which do not overlap the first communicating holes of the first shielding portion.

6. The shot processing apparatus according to any one of claims 1 to 4, wherein the drum has an outer peripheral wall and a bottom wall, wherein the shot processing apparatus further comprises a drum casing provided outside the drum to integrally cover the outer peripheral wall and the bottom wall.

7. The shot processing apparatus according to claim 5, which further comprises a drum casing provided outside the shielding member to cover the drum and the shielding member.

8. The shot processing apparatus according to claim 6 or 7, wherein a lower portion of the drum casing is formed with a projection material discharging port for discharging the projection materials within the drum casing, to an outside of the drum casing, when the drum is in the workpiece-processing position.

9. The shot processing apparatus according to any one of claims 1 to 8, wherein the door is formed with an air-intake opening communicating with an outer side of the door, and provided with a protector on the side of the drum with respect to the air-intake opening, the protector being configured to suppress leakage of the projection materials through the air-intake opening toward the outer side of the door.

10. The shot processing apparatus according to any one of claims 1 to 9, which the shot processing apparatus further comprises: a projection material tank storing therein the projection materials, the projection material tank being provided above the projector; an introduction pipe attached to the projection material tank to feed the projection materials downwardly; and an introduction tube provided below the introduction pipe, and formed with a projection material inlet opened upwardly at a position corresponding to the introduction pipe, the projection material inlet being set to a size capable of receiving the projection materials fed from the introduction pipe, even when the introduction tube is moved during opening/closing of the door.

11. The shot processing apparatus according to claim 10, wherein the introduction tube is configured to be moved in conjunction with the opening/closing of the door, and the introduction pipe is movable, following the movement of the introduction tube.

12. The shot processing apparatus according to claim 11, wherein the introduction pipe is formed with a joint which is bendable, following the introduction tube.
